# EUROPÄISCHE PATENTSCHRIFT

(11) **EP 0 700 508 B1**
(45) Veröffentlichungstag und Bekanntmachung des Hinweises auf die Patenterteilung: **16.10.2002**
(21) Anmeldenummer: 95913054.3
(22) Anmeldetag: 27.03.1995
(51) Int. Cl.: G01F 1/72, G01F 1/68, F02D 41/18

(54) **VERFAHREN ZUR KORREKTUR DES AUSGANGSSIGNALES EINES LUFTMASSENMESSERS**
METHOD OF CORRECTING THE OUTPUT SIGNAL OF AN AIR MASS FLOWMETER
PROCEDE DE CORRECTION D'UN SIGNAL DE SORTIE D'UN DEBITMETRE MASSIQUE D'AIR

(30) Priorität: 28.03.1994 DE 4410789
(43) Veröffentlichungstag der Anmeldung: 13.03.1996
(73) Patentinhaber: ROBERT BOSCH GMBH, 70442 Stuttgart (DE)
(72) Erfinder: HECHT, Hans, D-70825 Korntal-Muenchingen (DE); TANK, Dieter, D-71735 Eberdingen (DE); KONZELMANN, Uwe, D-71679 Asperg (DE)
(86) Internationale Anmeldenummer: DE9500411
(87) Internationale Veröffentlichungsnummer: WO95026493

(56) Entgegenhaltungen:
- EP-A- 0 219 942
- EP-A- 0 575 635
- WO-A-94/02730
- DE-A- 4 227 431
- US-A- 5 014 550

## Beschreibung

### Stand der Technik

Die Erfindung betrifft ein Verfahren zur Korrektur des Pulsationsfehlers im Ausgangssignal eines Luftmassenmessers, der Rückströmungserkennung ermöglicht, nach den Merkmalen des Oberbegriffs des Anspruchs 1.

Zur Erfassung der von Brennkraftmaschinen angesaugten Luftmassen werden Luftmassenmesser, die beispielsweise nach dem Heißfilmprinzip arbeiten, verwendet. Diese weisen üblicherweise ein beheiztes Element auf, das in dem zu messenden Luftstrom liegt und durch diesen gekühlt wird. Da beim Betrieb der Brennkraftmaschine Bedingungen auftreten können, unter denen Pulsationen der Ansaugluft auftreten können, weisen einige Luftmassenmesser Temperatursensoren auf, mit deren Hilfe die Temperaturdifferenz stromauf und stromab von einem Heizbereich ermittelt werden kann, dadurch ist es möglich, die Strömungsrichtung zu erkennen. Es kann bei solchen Luftmassenmessern auch eine Kennlinie mit einem Bereich für rückströmende Luft definiert werden. Unter Kennlinie ist dabei der Zusammenhang zwischen der Ausgangsspannung des Luftmassenmessers und der Luftmasse zu verstehen. Ein solcher Luftmassenmesser ist beispielsweise aus der DE-OS 43 24 040 bekannt.

Trotz der Rückströmungserkennung ist die Anzeige bei einem solchen Luftmassenmesser bei pulsierender Luftströmung mit Rückströmung nicht ganz richtig. Es wird üblicherweise vom Sensor bzw. Luftmassenmesser zu wenig Luftmasse angezeigt. Die Ursache dafür liegt in der zwar relativ geringen, jedoch vorhandenen thermischen Trägheit des Meßprinzips.

Aus der EP-A-0575635 und der WO-A-94/02730 sind jeweils Verfahren zur Messung des Luftmassenstroms im Ansaugrohr einer Brennkraftmaschine bekannt, bei denen die infolge von Pulsationen auftretenden- Fehlmessungen kompensiert werden. Im Einzelnen zeigt die Druckschrift EP-A-0575635 ein Verfahren zur Messung des pulsierenden Luftmassenstroms im Ansaugrohr einer Brennkraftmaschine, bei dem bei auftretender Pulsation nicht mehr der Messwert des Luftmassenmessers zur Berechnung von Regelgrößen für die Brennkraftmaschine verwendet wird, sondern ein Ersatzwert, der aus einem Ersatzkennfeld geholt wird. Zur Erkennung, dass Pulsationen auftreten, wird die Amplitude der Pulsation ermittelt und diese mit Grenzwerten verglichen. Das Kennfeld stellt dabei einen Zusammenhang zwischen strömender Luftmasse und sonstigen Größen der Brennkraftmaschine, beispielsweise Drehzahl oder Drosselklappenwinkel, dar.

Die WO-A-94/02730 beschreibt ein weiteres Verfahren zur Anpassung der Luftwerte aus einem Ersatzkennfeld, das bei Pulsationen der Luft im Ansaugrohr einer Brennkraftmaschine zum Einsatz kommt. Bei diesem Verfahren wird ein Ersatzkennfeld aufgestellt, das Luftwerte bei Normtemperatur und Normdruck enthält. Das Ersatzkennfeld wird verwendet, wenn bei Auftreten von Pulsationen der Luft im Ansaugrohr einer Brennkraftmaschine die vom Luftmesser gemessenen Luftwerte fehlerhaft sind. Der Ersatzwert aus dem Ersatzkennfeld wird dann noch modifiziert mit Adaptionsfaktoren, die beispielsweise aus dem Lambda-Regler-Mittelwert gewonnen werden.

### Vorteile der Erfindung

Das erfindungsgemäße Verfahren mit den Merkmalen des Hauptanspruchs hat demgegenüber den Vorteil, daß auch beim Auftreten von Rückströmungen eine sehr hohe Genauigkeit der Luftmassenerfassung und damit der Erfassung des Lastwertes der Brennkraftmaschine möglich ist. Ermöglicht wird dies, indem der Kennlinienbereich des Luftmassenmessers, der den pulsierenden Betrieb der Brennkraftmaschine charakterisiert, so geändert wird, daß die mittlere angezeigte Luftmasse des Luftmassenmessers bei Pulsation mit Rückströmung der tatsächlich vom Motor angesaugten Luftmasse entspricht.

Da der Kennlinienbereich der Rückströmung ausschließlich bei pulsierendem Betrieb der Brennkraftmaschine erreicht wird, wird in vorteilhafter Weise eine Korrektur nur bei erkannter Rückströmung durchgeführt. Bei nicht pulsierendem Betrieb wird mit der üblichen Kennlinie gearbeitet, es ist dann keine Korrektur erforderlich.

Weitere Vorteile der Erfindung werden durch die in den Unteransprüchen angegebenen Maßnahmen erzielt.

### Zeichnungen

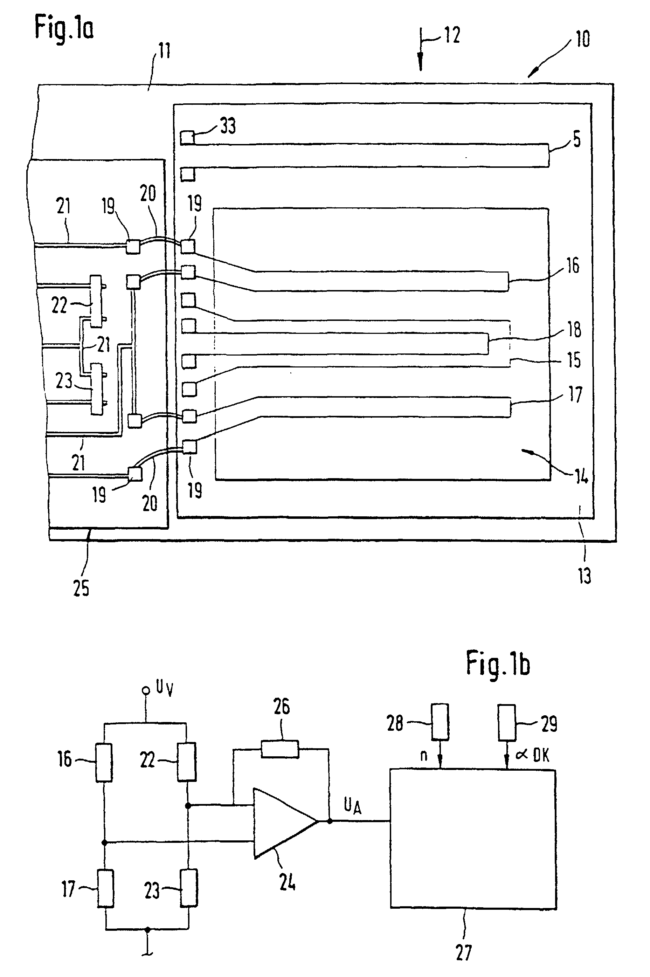

Die Erfindung wird im folgenden anhand der Zeichnungen dargestellt und näher erläutert. Dabei zeigen im einzelnen Figur la einen Luftmassenmesser, wie er beispielsweise aus der DE-OS 43 24 040 bekannt ist, Figur 1b eine mögliche

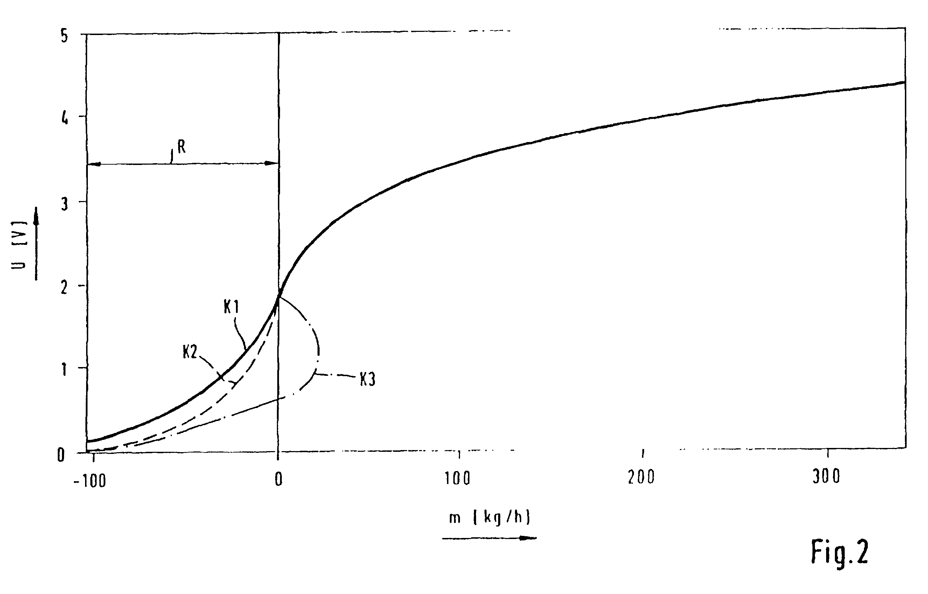

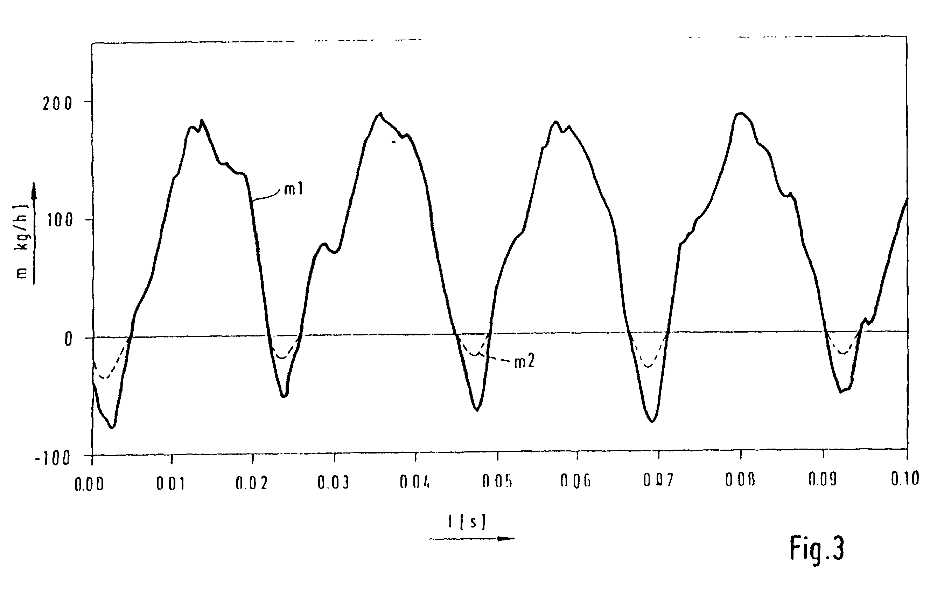

Auswerteschaltung, Figur 2 die Kennlinie eines solchen Luftmassenmessers einschließlich der erfindungsgemäßen Kennlinienbeeinflussungen und Figur 3 einen Zeitverlauf der pulsierenden Luftmasse.

### Beschreibung des Ausführungsbeispiels

Bei dem in Figur la dargestellten bekannten Luftmassenmesser ist das Sensorelement 10 auf einem Träger 11 angeordnet. Es befindet sich in dem durch den Pfeil 12 angedeuteten Medienstrom, also beispielsweise der strömenden Luft im Ansaugrohr einer Brennkraftmaschine.

Das Sensorelement 10 weist dabei einen Rahmen 13 aus einkristallinem Silizium sowie eine dielektrische Membran 14 auf, auf der ein Heizer 15 sowie zwei Temperaturmeßfühler 16, 17 und ein Heizertemperaturfühler 18 angeordnet sind. Über Bondpads 19 und Bonddrähte 20 sind die auf dem Sensorelement 10 angeordneten Elemente mit auf dem Träger 11 gelegenen Dickschichtschaltungen, die aus Dickschichtleiterbahnen 21 sowie Dickschicht- bzw. Dickfilmwiderständen 22, 23 bestehen, verbunden. Die genauen Ausgestaltungen sowie Variationsmöglichkeiten sind dabei der DE-OS 43 24 040 zu entnehmen.

Die beiden Temperaturmeßfühler 16, 17 werden vom Heizer 15 auf eine Temperatur gebracht, die über der Temperatur des ungestörten strömenden Mediums liegt. Zwischen dem Medium und der Membran 14 findet ein Wärmeaustausch statt, der von der Temperaturdifferenz zwischen der jeweiligen Stelle der Membran und dem Medium abhängt. Da der Temperaturmeßfühler 17 in Strömungsrichtung nach dem Heizer 15 gelegen ist, ist somit der Wärmeübergang vom Temperaturmeßfühler 17 an das strömende Medium geringer, da das Medium durch den Heizer 15 bereits eine höhere Temperatur aufweist. Die so entstehende Temperaturdifferenz zwischen dem Temperaturmeßfühler 16 und dem Temperaturmeßfühler 17 ist ein Maß für den Massenstrom des vorbeiströmenden Mediums.

Die beiden Temperaturmeßfühler 16, 17 sowie die Dickschichtwiderstände 22, 23 sind in einer Brückenschaltung verschaltet, die zwischen Versorgungsspannung UV und Masse und liegt. Der Mittelabgriff der beiden Brückenzweige ist in üblicher Weise mit einem Differenzverstärker 24 mit Rückkoppelwiderstand 26 verbunden. Dieser gibt ein Signal UA aus, das proportional zur Spannungsdifferenz an der Brückendiagonale ist und nach dem erfindungsgemäßen Verfahren ausgewertet werden soll.

Die Dickschichtwiderstände 22, 23, der Verstärker 24 sowie ggf. weitere Bauelemente können auf einem eigenen Träger 25 angeordnet sein, der auf den Träger 11 aufgebracht wird.

Mit dem in Figur 1 dargestellten Luftmassenmesser, dessen verstärktes Ausgangssignal UA beispielsweise vom Steuergerät 27 oder einer sonstigen Auswerteeinheit weiterverarbeitet wird, kann durch die Auswertung einer Temperaturdifferenz stromauf und stromab vom Heizbereich 18 die Strömungsrichtung erkannt werden. Es läßt sich damit auch eine Kennlinie mit einem Bereich für rückströmende Luft definieren. In Figur 2 ist eine solche Kennlinie dargestellt, wobei auf der Ordinate die Spannung U in Volt und auf der Abszisse die Luftmasse m in kg/h aufgetragen ist. Die Nullinie trennt den Rückströmbereich R vom übrigen Bereich. Die durchgezogene Kennlinie K1 stellt eine gemessene Kennlinie dar, die im Rückströmbereich mit Fehlern behaftet ist und geeignet korrigiert werden soll.

Wie Vergleichsmessungen am Prüfstand, bei denen die tatsächlich verbrauchte Luft ermittelt wurde, gezeigt haben, ist trotz der Rückströmungserkennung die Anzeige des in Figur 1 beschriebenen Sensors bei pulsierender Luftströmung mit Rückströmung nicht exakt. Der Sensor zeigt zu wenig Luftmasse an. Die Ursache hierfür liegt in der zwar geringen, jedoch vorhandenen thermischen Trägheit des Meßprinzips.

Bekanntermaßen wird der Kennlinienbereich der Rückströmung ausschließlich bei pulsierendem Betrieb der Brennkraftmaschine erreicht. Die Abwandlung der Kennlinie im Rückströmbereich betrifft also üblicherweise den Betrieb des Luftmassenmessers bei nicht pulsierendem Betrieb nicht. Wird die Kennlinie im Rückströmbereich R so geändert, daß die mittlere angezeigte Luftmasse des Sensors bei Pulsationen mit Rückströmung der tatsächlich vom Motor angesaugten Luftmasse entspricht, wird der gestrichelt einzeichnete Kennlinienverlauf K2 erhalten. Eine extreme Modifizierung der Kennlinie ist möglich, indem der ebenfalls gestrichelt dargestellte Kennlinienverlauf K3, der sogar in den Normalbereich reicht, verwendet wird.

Figur 3 zeigt wie durch eine andere Zuordnung von Luftmasse zur Signalspannung das Luftmassenmessersignal im Rückströmbereich geändert wird und wie dadurch die mittlere angezeigte Luftmasse je Saughub vergrößert wird. Dadurch kann die durch thermische Trägheit bewirkte Minderanzeige kompensiert werden. Die Rückströmkennlinie kann dabei beliebig geändert werden, es muß nur ein eindeutiger Zusammenhang zwischen Spannung und Luftmassenwert bestehen.

In Figur 3 ist die Luftmasse m in kg/h über der Zeit t in Sekunden aufgetragen. Dabei zeigt die durchgezogene Kurve m1 den Zeitverlauf der Luftmasse mit gemessener Kennlinie. Gestrichelt ist der Verlauf m2 mit modifizierter Kennlinie im Rückströmbereich dargestellt.

Die Pulsationskorrektur durch eine modifizierte Rückströmkennlinie erzeugt nur in einem engen Frequenz-Luftmassenbereich einen geringen Anzeigefehler des Luftmassenmessers. An einer bestimmten Brennkraftmaschinentyp treten starke Pulsationen mit Rückströmung normalerweise nur bei einer bestimmten Drehzahl und bei großen Öffnungswinkeln der Drosselklappe auf, d.h. die Pulsationsfrequenz bleibt konstant und die mittlere Luftmasse ändert sich nur wenig.

Die zu modifizierende Rückströmkennlinie muß also nur für eine Frequenz und eine Luftmasse angepaßt werden. Diese Anpassung muß individuell für verschiedene Brennkraftmaschinen durchgeführt werden und kann beispielsweie empirisch durch Vergleich mit am Prüfstand gewonnenen Daten erfolgen. Bei Brennkraftmaschinen mit großen Pulsationsfehlern wird mit dem erfindungsgemäßen Verfahren eine deutliche Reduzierung des Fehlers erreicht.

Aus dem mit modifizierter Kennlinie erhaltenen Luftmassenverlauf m(t) wird im Steuergerät 27 in üblicher Weise der Mittelwert der Luftmasse oder die Luftmasse pro Hub usw. ermittelt. Ausgehend von den so ermittelten Werten erfolgt die Steuerung und/oder Regelung der Brennkraftmaschine. Dazu werden weitere Größen wie die Drehzahl n der Brennkraftmaschine und/oder der Drosselklappenwinkel α_{DK}, die über entsprechende Sensoren 28, 29 gemessen werden, mitberücksichtigt.

## Patentansprüche

1. Verfahren zur Korrektur des Ausgangssignales eines im Ansaugrohr einer Brennkraftmaschine angeordneten Luftmassenmessers zur Ermittlung der von der Brennkraftmaschine angesaugten Luftmasse, wobei eine Kennlinie des Luftmassenmessers, die den Zusammenhang zwischen der Ausgangsspannung des Luftmassenmessers und der strömenden Luftmasse darstellt, ermittelt wird und die ermittelte Kennlinie im Rückströmbereich, also in einem Bereich, in dem die strömende Luftmasse bei bestimmten Betriebsbedingungen der Brennkraftmaschine zurückströmen kann, korrigiert wird und die Korrektur so erfolgt, dass die im Rückströmbereich auftretenden Fehlmessungen minimalisiert werden, und die korrigierte Kennlinie und/oder Korrekturwerte für die Kennlinie in einem Speicher einer Recheneinrichtung abgelegt werden und die tatsächlich angesaugte Luftmasse von der Recheneinrichtung unter Berücksichtigung der abgespeicherten korrigierten Kennlinie berechnet wird.

2. Verfahren nach Anspruch 1, **dadurch gekennzeichnet, dass** die Kennlinie und/oder die Korrekturwerte für die korrigierte Kennlinie im Speicher eines Steuergerätes der Brennkraftmaschine abgelegt werden und die erforderlichen Berechnungen ebenfalls im Steuergerät ablaufen.

3. Verfahren nach Anspruch 1 oder 2, **dadurch gekennzeichnet, dass** die Kennlinie oder die Kennlinien Korrekturwerte für einen bestimmten Brennkraftmaschinentyp umfassen und speziell für diesen Brennkraftmaschinentyp ermittelt werden und jeweils im Steuergerät dieser Brennkraftmaschinen abgelegt werden.

4. Verfahren nach einem der vorhergehenden Ansprüche,
**dadurch gekennzeichnet, dass** die korrigierte Rückströmkennlinie zur Pulsationskorrektur nur in einem engen Frequenzbereich der Pulsationen eingesetzt wird.

5. Verfahren nach einem der vorhergehenden Ansprüche,
**dadurch gekennzeichnet, dass** die Pulsationskorrektur nur in einem vorgebbaren Drehzahl- und/oder Winkelbereich der Drosselklappe der Brennkrafmaschine vorgenommen wird.

6. Verfahren nach einem der vorhergehenden Ansprüche,
**dadurch gekennzeichnet, dass** das Steuergerät den Mittelwert aus der gemessenen Luftmasse bestimmt.

## Claims

1. Method for correcting the output signal of an air mass meter, arranged in the induction pipe of an internal combustion engine, for the purpose of determining the air mass inducted by the internal combustion engine, a characteristic of the air mass meter which represents the relationship between the output voltage of the air mass meter and the flowing air mass being determined, and the characteristic determined being corrected in the return flow region, that is to say in any region in which the flowing air mass can flow back under specific operating conditions of the internal combustion engine, and the correction being performed such that the erroneous measurements occurring in the return flow region are minimized, and the corrected characteristic and/or correction values for the characteristic are stored in a memory of a computing device, and the air mass actually inducted is calculated by the computing device taking account of the stored corrected characteristic.

2. Method according to Claim 1, **characterized in that** the characteristic and/or the correction values for the corrected characteristic are stored in the memory of a control device of the internal combustion engine, and the required calculations are likewise performed in the control device.

3. Method according to Claim 1 or 2, **characterized in that** the characteristic or characteristics comprise correction values for a specific type of internal combustion engine and are specially determined for this type of internal combustion engine and are respectively stored in the control device of these internal combustion engines.

4. Method according to one of the preceding claims, **characterized in that** the corrected return-flow characteristic is used for pulsation correction only in a narrow frequency range of the pulsations.

5. Method according to one of the preceding claims, **characterized in that** the pulsation correction is undertaken only in a prescribable speed and/or angle range of the throttle valve of the internal combustion engine.

6. Method according to one of the preceding claims, **characterized in that** the control device determines the average value of the measured air mass.

## Revendications

1. Procédé de correction du signal de sortie d'un débitmètre massique d'air installé dans la conduite d'admission d'un moteur à combustion interne pour déterminer la masse d'air aspirée par le moteur, selon lequel
on détermine une courbe caractéristique du débitmètre massique d'air représentant la relation entre la tension de sortie du débitmètre massique d'air et la masse d'air débitée, et
on corrige la courbe caractéristique obtenue dans la plage du flux en retour, c'est-à-dire dans une plage dans laquelle la masse d'air qui passe peut circuler en sens inverse dans certaines conditions de fonctionnement du moteur à combustion interne, et on effectue la correction pour que les mesures erronées produites dans cette plage de flux en retour soient réduites au minimum, et
on enregistre la courbe caractéristique corrigée et/ou les valeurs de correction de la courbe caractéristique dans une mémoire d'une installation de calcul, et
on calcule la masse d'air effective avec l'installation de calcul en tenant compte de la courbe caractéristique corrigée et enregistrée.

2. Procédé selon la revendication 1,
**caractérisé en ce qu'**
on enregistre la courbe caractéristique et/ou les valeurs de correction de la courbe caractéristique corrigée dans la mémoire d'un appareil de commande du moteur à combustion interne et les calculs nécessaires s'effectuent également dans l'appareil de commande.

3. Procédé selon l'une quelconque des revendications 1 ou 2,
**caractérisé en ce que**
la courbe caractéristique ou les courbes caractéristiques comportent des valeurs de correction pour un certain type de moteurs à combustion interne et en particulier on les détermine pour ce type de moteurs à combustion interne et on les enregistre chaque fois dans l'appareil de commande de ce moteur à combustion interne.

4. Procédé selon l'une quelconque des revendications précédentes,
**caractérisé en ce qu'**
on utilise la courbe caractéristique de retour de flux pour corriger la pulsation seulement dans une plage étroite des fréquences des pulsations.

5. Procédé selon l'une quelconque des revendications précédentes,
**caractérisé en ce qu'**
on effectue la correction de pulsations seulement dans une plage donnée de régime et/ou d'angle du volet d'étranglement du moteur à combustion interne.

6. Procédé selon l'une quelconque des revendications précédentes,
**caractérisé en ce que**
l'appareil de commande détermine la valeur moyenne à partir de la masse d'air mesurée.
